(19) **Europäisches Patentamt**

**European Patent Office**

**Office européen des brevets**

(11) **EP 1 666 870 A2**

(12) **EUROPEAN PATENT APPLICATION**

(43) Date of publication:
**07.06.2006 Bulletin 2006/23**

(51) Int Cl.:
***G01N 21/27*** (2006.01)   ***G01N 21/35*** (2006.01)

(21) Application number: **06001476.8**

(22) Date of filing: **22.03.2001**

(84) Designated Contracting States:
**AT BE CH CY DE DK ES FI FR GB GR IE IT LI LU MC NL PT SE TR**

(30) Priority: **17.10.2000 JP 2000316331**

(62) Document number(s) of the earlier application(s) in accordance with Art. 76 EPC:
**01302662.0 / 1 199 555**

(71) Applicants:
 • **Japan as Represented by Director of National Food**
 **Research Institute Ministry of Agriculture, Forestry and Fisheries**
 **Tsukuba-shi**
 **Ibaraki (JP)**
 • **Bio-oriented Technology Research Advancement**
 **Institution**
 **Minato-ku,**
 **Tokyo (JP)**

(72) Inventors:
 • **Kawano, Sumio**
 **Ibaraki (JP)**
 • **Iyo, Chie**
 **Tsukuba-shi**
 **Ibaraki (JP)**

(74) Representative: **Booth, Catherine Louise**
 **Frank B. Dehn & Co.**
 **St Bride's House**
 **10 Salisbury Square**
 **London EC4Y 8JD (GB)**

Remarks:
 This application was filed on 24 - 01 - 2006 as a divisional application to the application mentioned under INID code 62.

(54) **Analytical method and apparatus for liquid sample using near infrared spectroscopy**

(57) First, monochromatic near infrared light in a wavelength range of 700nm - 1100nm from the slit of the near infrared apparatus (1) is applied to a reference ceramic plate through the optical fiber (7) to measure a transmitted light intensity of the ceramic plate which is a reference material for spectrum measurement. Next, in place of the ceramic plate, the test tube (4) containing a liquid sample of which the temperature has been adjusted at a predetermined temperature by a water bath and the like is inserted into the housing portion (5). The transmitted light intensity of the liquid sample is then measured using the same procedure as above. A so-called near infrared absorption spectrum in which absorbance has been plotted against wavelengths is displayed on the screen of the computer (2). Information about each object characteristic is extracted from the spectrum data using a calibration equation.

FIG. 1

**EP 1 666 870 A2**

## Description

The present invention relates to an analytical method and apparatus for liquid samples using near infrared spectroscopy which analyzes chemical components and physicochemical characteristics (hereinafter referred to as "object characteristics") of the liquid samples such as unhomogenized raw milk, vegetable juice, edible oil, rumen juice, urine, oil, industrial waste water, lake water, or the like.

A method for measuring sugar and the like in foods nondestructively using near infrared light is known in the prior art. For example, absorption spectroscopy using the near infrared light is disclosed in Japanese Unexamined Patent Publication No. Hei 11-44638, in which white light such as that from a halogen lamp is applied to fruit to measure and analyze distribution of transmitted light intensity to a wavelength (transmittance spectrum), thereby measuring the sugar content of the fruit.

In the above-mentioned near infrared light absorption spectroscopy, it is only possible to take an extremely rough measurement. For example, it is not possible to correctly measure fat, protein, starch, iodine value, acid value and the like in the foods.

To obtain a correct measurement, it is necessary to completely remove impurities from the liquid sample or to homogenize the liquid samples. In such a condition, promptness and convenience that are merits of the near infrared spectroscopy are compromised.

Further, in conventional near infrared spectroscopy, because near infrared light in a wavelength range of 1100nm - 2500nm is used, it is necessary to prepare a special crystal sample cell with an optical path length of 0.1 - 2mm. Accordingly, operations such as cleaning, drying, and filling of the sample are troublesome and require time. Further, because of the narrow optical path length, non-uniformity of the sample and existence of impurities have a great influence on measured results.

It is therefore an object of the present invention to provide an analytical method and apparatus in which even in the case of near infrared light, if near infrared light in a short wavelength range of, for example, 700nm - 1100nm is used, its transmission capacity is 10 to 100 times as large as that of a long wavelength range, the optical path length can be maintained at a level of 1 - 2cm, and analysis can be carried out even with an ordinary test tube.

Namely, according to the present invention, an analytical method is provided, which comprises the steps of applying near infrared light in a short wavelength range (700nm - 1100nm) to a liquid sample within a containment means such as a test tube from the outside, detecting diffusely (scattered) reflected light, diffusely transmitted light, or diffusely transmitted and reflected light from the liquid sample by an optical sensor to measure a near infrared absorption spectrum of the liquid sample, and applying a calibration equation, which has been made in advance from a spectrum measured using the same method as above, to the measured value so as to determine object characteristics of the liquid sample.

When near infrared light is applied to an object (the liquid sample), only a specified wavelength light is absorbed in proportion to the number of molecules out of various molecules contained in the object. The wavelength of light absorbed varies with the structure of the molecule (kind of the molecule). The liquid sample contains various kinds of components and generates a complicated absorption phenomenon in which absorptions overlap. The near infrared absorption spectrum is obtained by plotting the absorbance (i.e. the degree to which the light is absorbed) against wavelengths. To conduct quantitative analysis by using this near infrared absorption spectrum, a regression equation (a calibration equation) that relates a value of the object characteristics (the concentration or the characteristic value) to spectrum data is required. Usually, the spectrum of a sample of which the value of the object characteristics is known is measured. Based on the spectrum data and the object characteristic value, the calibration equation can be made by a chemometries technique such as multiple linear regression (MLR), principal component regression (PCR), and PLS regression (PLS).

The liquid samples as an object of the present invention are, for example, food (such as milk, fruit, vegetable juice and edible oil), rumen juice, urine, oil, industrial waste water, lake water, or the like.

In the spectrum measurement of the sample for making the calibration equation, it is preferable to use a plurality of test tubes with the same specification. Thus, it is possible to use the plurality of test tubes with the same specification at the time of routine analysis.

To attain the above-mentioned object, according to the present invention, an analytical apparatus is provided which comprises a block provided with a housing portion for a test tube, a near infrared apparatus provided with a spectroscope for dispersing near infrared light in a short wavelength range from light from a light source or a sample and an optical sensor for detecting the near infrared light, light conduction means for conducting the near infrared light in the short wavelength range emitted from the light source or the spectroscope to the test tube within the housing portion and for conducting, directly or through the spectroscope, diffusely reflected light, diffusely transmitted light, or diffusely ransmitted and reflected light from the liquid sample within the test tube to the optical sensor, and control means for outputting a measurement command of a spectrum to the near infrared apparatus and for replacing the measured spectrum with a value obtained from a calibration equation which has been made in advance, thereby computing object characteristics of the liquid sample.

As the light source, a white light source such as a tungsten halogen lamp is used and a diode array is used as the optical sensor.
Further, when the monochromatic near infrared light is used as the light source, it is preferable to use a silicon detector as the optical sensor.

As the light conducting means, it is preferable to use an optical fiber (a single fiber) or an optical fiber bundle (a bundle of optical fibers).

It is also possible to realize a high precision measurement if the block is provided with a temperature control means for stabilizing the liquid sample within the test tube at a predetermined temperature.

The above and other objects, features and advantages of the present invention will become more apparent from the following description when taken in conjunction with the accompanying drawings.

Fig. 1 is a general view of one example of an apparatus for carrying out an analytical method for a liquid sample according to the present invention;
Fig. 2 is a partially enlarged cress-sectional view showing a condition in which the apparatus analyzes a reference material;
Fig. 3 is a partially enlarged cross-sectional view showing a condition in which the apparatus analyzes the liquid sample;
Fig. 4 is a view showing near infrared absorption spectra of spinach juice, tomato juice and raw milk;
Fig. 5 is a graph comparing measured values by the method of the present invention with analytical values by the conventional chemical analysis for nitric acid content of spinach; and
Fig. 6 is a graph comparing measured values by the method of the present invention with analytical values by the conventional chemical analysis for fat content of raw milk.

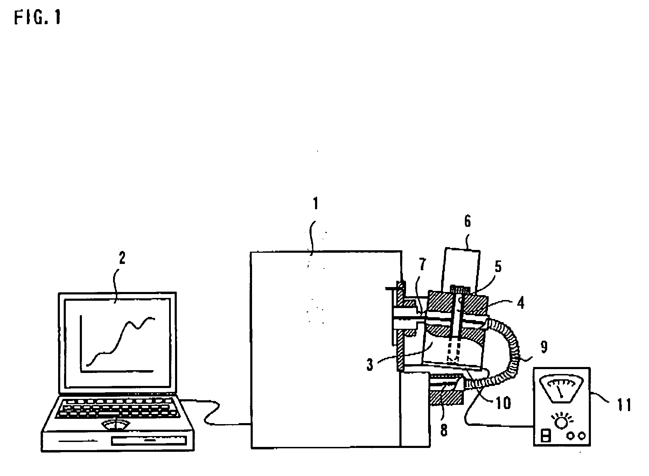

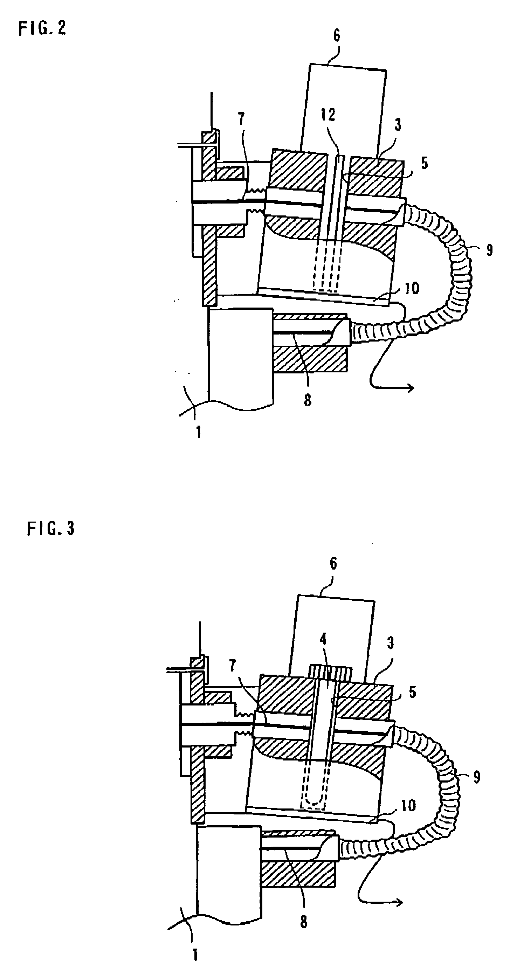

A preferred embodiment of the present invention will now be described with reference to the accompanying drawings. Fig. 1 is a general view showing one example of an apparatus that carries out an analytical method for a liquid sample according to the present invention. Fig. 2 is a partially enlarged cross-sectional view showing a condition in which the apparatus analyzes a reference material and Fig. 3 is a partially enlarged cross-sectional view showing a condition in which the apparatus analyzes the liquid sample.

An analytical apparatus for carrying out an analytical method for a liquid sample of the present invention is, as shown in Fig. 1, provided with a dispersive type near infrared apparatus 1 and a computer 2 to control it. The near infrared apparatus 1 is provided therein with a spectroscope for dispersing near infrared light from white light from a source of light and an optical sensor for detecting the near infrared light. An aluminum block 3 is attached to the near infrared apparatus 1.

This block 3 is formed with a housing portion 5 which can house a test tube 4 therein. The upper surface of the housing portion 5 is open and a cap 6 is arranged to prevent light from entering this open portion.

One end of an optical fiber 7 is connected to the spectroscope which is provided within the near infrared apparatus 1 and the other end thereof faces the inside of the housing portion 5. One end of an optical fiber 8 is connected to the optical sensor provided within the near infrared apparatus 1 and the other end thereof faces a position opposite to the other end of the optical fiber 7 on the inside of the housing portion 5. The optical fibers 7 and 8 are protected by a bellows tube 9.

Provided under the block 3 is a heating apparatus 10 such as a panel heater for stabilizing the liquid sample within the test tube 4 at a predetermined temperature. A controller 11 is arranged to control this heating apparatus 10.

A spectrum measurement procedure for a liquid sample using the analytical apparatus described above will now be explained.

First, a ceramic plate 12 (2.5 mm in thickness) which is a reference material for spectrum measurement is set within the housing portion 5 of the aluminum block 3 and a light shielding cap is set to cover the housing portion 5. The computer 2 is then operated to measure the transmitted light intensity of the ceramic plate 12. Namely, the monochromatic near infrared light in a range of 700nm - 1100nm from slits of the near infrared apparatus 1 is applied to the ceramic plate 12 through the optical fiber 7. The light diffusely transmitted through the ceramic plate 12 is detected through the optical fiber 8 by the optical sensor provided within the near infrared apparatus 1.

The near infrared apparatus I can scan a predetermined wavelength range in about 0.5 seconds. The near infrared apparatus 1 usually repeats the scan about 50 times and the measurements are averaged to obtain the transmitted light intensity of the ceramic plate 12 at each wavelength.

Next, in place of the ceramic plate 12, the test tube 4 containing a liquid sample adjusted at a predetermined temperature by a water bath and the like is inserted into the housing portion 5. The transmitted light intensity of the liquid samples is then measured using the same procedure as above.

The absorbance as shown by a formula (1) is computed by the computer 2 and a so-called near infrared absorption spectrum in which the absorbance has been plotted against wavelengths is displayed on the screen of the

computer 2.

$$A\,(\lambda) = \log\,\{\,Er\,(\lambda)\,/\,Es\,(\lambda)\,\} \tag{1}$$

where, $A\,(\lambda)$ : absorbance at the wavelength of $\lambda$nm
$Er\,(\lambda)$ : intensity of light transmitted through the ceramic plate at the wavelength of $\lambda$nm
$Es\,(\lambda)$ : intensity of light transmitted through the liquid sample at the wavelength of $\lambda$nm

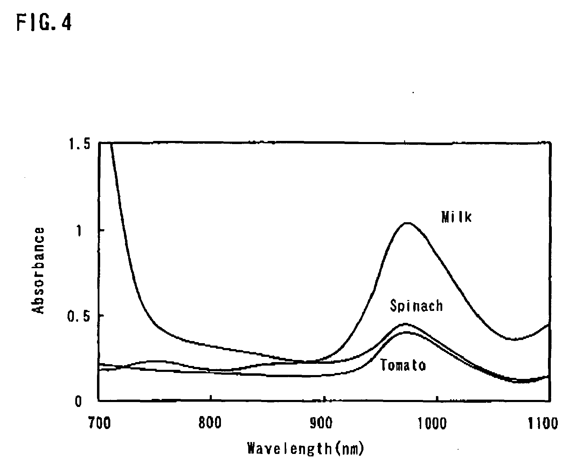

Fig. 4 shows the near infrared absorption spectra of spinach juice, tomato juice and raw milk. An absorption band (the peak of a chevron) as seen in 970nm is absorption mainly due to water. It is not possible to clearly observe the absorption band of nitric acid, oxalic acid, ascorbic acid (vitamin C), fat, protein, lactose and the like contained in the sample. However, the information for these object characteristics is also included in the same spectra. Thus, to extract the information for each object characteristic from the spectrum data, a calibration equation that relates each object characteristic to the spectrum data is necessary. The calibration equation for measuring the content of the nitric acid will be described below.

(A) Prepare the liquid samples having a wide range of nitric acid contents and analyze the nitric acid content of each liquid sample by the conventional method.
(B) Prepare at least 100 specimens of the liquid sample having a wide range of nitric acid contents.
(C) Fill the liquid sample into the test tube 4 and adjust the temperature of the liquid sample at a predetermined temperature using a water bath. Measure the near infrared absorption spectrum of the liquid sample using the method described above. Repeat this operation for the number of specimens.
(D) Input the analyzed nitric acid content in the corresponding spectrum data file.
(E) Divide the spectrum data with the nitric acid content into the two data sets for calibration and validation.
(F) Carry out MSC treatment, derivative treatment and the like on the spectrum data of calibration set as a pretreatment for the near infrared absorption spectrum as occasion demands.
(G) Using the pretreated spectrum data of calibration set, prepare a plurality of relational equations (regression equations) which can be candidates for the calibration equation by a chemometrics technique such as MLR, PCR and FLS.
(H) Using the spectrum data of validation set which has not been used for calibration, evaluate the performance of the relational equations made in the preceding paragraph by standard error of prediction (SEP). Adopt the equation with the smallest SEP as the calibration equation at the time of the routine analysis.

Table 1 shows a result of the MLR using the second derivative spectra of the spinach juice. Table 2 shows a result of the PLS using the original spectra of the raw milk. Measurement of the nitric acid of the spinach can be made only by measuring the absorbance at the wavelengths of 863nm, 880nm, 824nm, and 1016nm.

[Table 1] Results of multiple linear regression (MLR) using the second derivative spectra of the spinach juice

| Components | 1 | 2 | 3 | 4 | R | SEC | SEP | Bias |
|---|---|---|---|---|---|---|---|---|
| Nitric acid (mg/100g) | 863 | 880 | 824 | 1016 | 0.86 | 18.3 | 18.7 | 0.0 |
| Oxalic acid (mg/100g) | 974 | 916 | 726 | 998 | 0.89 | 74.0 | 86.0 | -5.2 |

R: Multiple correlation coefficient
SEC: Standard error of calibration
SEP: Standard error of prediction
Bias: Difference between a mean value of chemical component values and a mean value of NIR values

[Table 2] Results of PLS regression analysis using the original spectra of raw milk

| Component | F | R | SEC | SEP | Bias |
|---|---|---|---|---|---|
| Fat (%) | 4 | 0.99 | 0.12 | 0.11 | 0.00 |
| Protein (%) | 7 | 0.97 | 0.07 | 0.07 | 0.00 |

Table continued

| Component | F | R | SEC | SEP | Bias |
|---|---|---|---|---|---|
| Lactose (%) | 9 | 0.89 | 0.08 | 0.08 | -0.01 |

F: Number of factors used in the calibration equation
R: Multiple correlation coefficient
SEC: Standard error of calibration
SEP: Standard error of prediction
Bias: Difference between a mean value of the chemical component values and a mean value of NIR values

The multiple correlation coefficient between the chemical analysis value and NIR measurement value is 0.86 and the standard error of calibration (SEC) is 18.3mg/100g. The standard error of prediction (SEP) is 18.7mg/100g. In the case of the routine analysis, measurement is made with the error of this SEP. In the case of raw milk, for example, the fat is measurable at an error of 0.11%.

In the routine analysis, the following calibration equation is used.

1. When the object characteristic is the nitric acid content of the spinach juice:

$$\text{Nitric acid content (mg/100g)}=K0+K1{\bullet}L(863)+K2{\bullet}L(880)+K3{\bullet}L(824)+K4{\bullet}L(1016)... \quad (2)$$

where, L($\lambda$): the second derivative value of the absorbance at $\lambda$nm
Ki: $i^{th}$ regression coefficient (where, i = 0 - 4)

2. When the object characteristic is the fat content of raw milk:

$$\text{Fat content (\%)}=F1{\bullet}q1+F2{\bullet}q2+F3{\bullet}q3+F4{\bullet}q4 \quad \cdots \quad (3)$$

where,
Fi : $i^{th}$ factor (however, i = 1 - 4)
A ($\lambda$) :original spectrum of raw milk (absorbance at$\lambda$nm)
Wi ($\lambda$) : $i^{th}$ loading weight (where, i = 1 - 4)
Qi:$i^{th}$ regression coefficient (where, i = 1 - 4)
The regression coefficients Ki and qi, and the loading weight Wi ($\lambda$) are the constants to be determined in response to each object characteristic. Accordingly, if the absorbance at each wavelength is measured, it is possible to compute the nitric acid content or the fat content using the formulas (2) or (3). Quantitative analysis can also be carried out for other object characteristics using the same method as above.

An analytical procedure for the liquid sample in the routine on-site analysis and the like is as follows. However, the above-mentioned calibration equation shall be stored in the near infrared apparatus 1.

(A) The electrical supply of the near infrared apparatus 1 is switched on. After the near infrared apparatus 1 is stabilized, a reference spectrum is measured using the ceramic plate 12.
(B) The sample is filled into the test tube 4. The temperature of the sample is adjusted by a water bath.
(C) The test tube 4 containing the sample of which the temperature has been adjusted is set in the housing portion 5 of the block 3. The computer 2 is operated to allow the near infrared apparatus 1 to measure the spectrum.
(D) After the spectrum measurement is completed, the computer 2 is operated to compute the object characteristics based on the calibration equation stored therein and the spectrum obtained, and displays the object characteristics on the screen.
(E) Repeat the operations (B) -(D) for the number of samples and the object characteristics for each sample can be obtained. Time required for the operations of (C) and (D) is about 30 seconds.

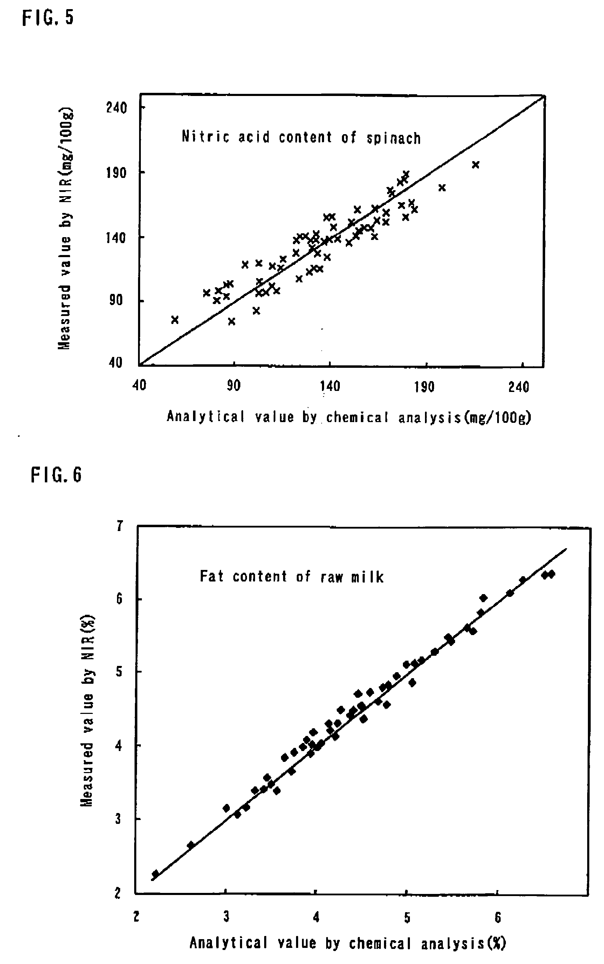

The correlation between the analytical result of the nitric acid content of the spinach by the NIR method of the present invention and the analytical result of the same by the conventional chemical analysis is shown in Fig. 5. Fig. 5 shows that the measured value of the nitric acid content of the spinach by the NIR method of the present invention and the measured value of the nitric acid content of the spinach by the conventional chemical analysis have extremely high correlation.

Further, the correlation between the analytical result of the fat content of the raw milk by the NIR method of the present invention and the analytical result of the same by the conventional chemical analysis is shown in Fig. 6. Fig. 6 shows that the measured value of the fat content of the raw milk by the NIR method of the present invention and the analytical value of the fat content of the raw milk by the conventional chemical analysis have extremely high correlation. In the above-mentioned embodiment, it is explained that the object characteristics of the liquid sample are measured using the transmittance method, but it is also possible to use the reflectance method or the transflectance (transmittance + reflectance) method. In such a case, the arrangement of the optical fiber, of course, differs from the above.

As described above, according to the analytical method for the liquid sample according to the present invention, pretreatment such as homogenization of the sample or removal of the impurities is not required, nor is the special sample cell for housing the liquid sample required. It is therefore possible to obtain the object characteristic value of the liquid sample simply and promptly. It is also possible to instantaneously obtain the information about the main components and characteristics of the object on site at agriculture locations and food factories. With this construction, higher quality control and process control can be realized.

**Claims**

1.  An analytical method for a liquid sample using near infrared spectroscopy comprising the steps of:

    applying near infrared light having a wavelength range of 700nm - 1100nm to the liquid sample within a test tube (4) from the outside;
    detecting diffusely reflected light, diffusely transmitted light, or transmitted and reflected light from the liquid sample by an optical sensor to measure a near infrared absorption spectrum of the liquid sample; and
    applying a calibration equation, which has been made in advance from a spectrum measured using the same method as above, to the measured values so as to determine object characteristics of the liquid sample, wherein light having a wavelength of 700nm - 1100nm is applied to a ceramic plate (12) which is a reference material so as to obtain the intensity of the light transmitted through the ceramic plate as a reference value.

2.  An analytical method for a liquid sample using near infrared spectroscopy comprising the steps of:

    applying near infrared light in a short wavelength range to the liquid sample within a containment means (4) from the outside;
    detecting diffusely reflected light, diffusely transmitted light, or transmitted and reflected light from the liquid sample by an optical sensor to measure a near infrared absorption spectrum of the liquid sample; and
    applying a calibration equation, which has been made in advance from a spectrum measured using the same method as above, to the measured value so as to determine object characteristics of the liquid sample.

3.  The analytical method for a liquid sample using near infrared spectroscopy according to claim 2, wherein the wavelength of near infrared light applied to the liquid sample is 700nm - 11 00nm.

4.  The analytical method for a liquid sample using near infrared spectroscopy according to claim 2 or 3, wherein the containment means is a test tube.

5.  The analytical method for a liquid sample using near infrared spectroscopy according to any preceding claim, wherein a plurality of containment means or test tubes (4) with the same specifications is used as a sample cell in the spectrum measurement of the sample for calibration.

6.  The analytical method for a liquid sample using near infrared spectroscopy according to any preceding claim, wherein the liquid samples are food (such as milk, fruit and vegetable juice, and edible oil), rumen juice, urine, oil, industrial waste water, or lake water.

7.  An analytical apparatus for a liquid sample comprising:

    a ceramic plate (12) as a reference material for obtaining the intensity of light transmitted through the ceramic plate as a reference value;

a block (3) provided with a housing portion (5) for a test tube (4) or the ceramic plate (12);

a near infrared apparatus (1) provided with a spectroscope for dispersing near infrared light having a wavelength range of 700nm - 1100nm from a source of light or the sample and an optical sensor for detecting the near infrared light,

light conduction means (8) for conducting the near infrared light emitted from the light source or the spectroscope to the test tube (4) or the ceramic plate (12) within the housing portion (5) and for conducting, directly or through the spectroscope, diffusely reflected light, diffusely transmitted light, or transmitted and reflected light from the liquid sample within the test tube (4) to the optical sensor; and

control means (11) for outputting a measurement command of a spectrum to the near infrared apparatus (1) and for applying a calibration equation, which has been made in advance, to the measured spectrum so as to compute object characteristics of the liquid sample.

8. An analytical apparatus for a liquid sample comprising:

a block (3) provided with a housing portion (5) for a containment means (4);

a near infrared apparatus (1) provided with a spectroscope for dispersing near infrared light in a short wavelength range from light from a source of light or the sample and an optical sensor for detecting the near infrared light;

light conduction means (8) for conducting the near infrared light in the short wavelength range emitted from the light source or the spectroscope to the containment means (4) within the housing portion (5) and for conducting, directly or through the spectroscope, diffusely reflected light, diffusely transmitted light, or transmitted and reflected light from the liquid sample within the test tube to the optical sensor; and '

control means (11) for outputting a measurement command of a spectrum to the near infrared apparatus (1) and for applying a calibration equation, which has been made in advance, to the measured spectrum so as to compute object characteristics of the liquid sample.

9. The analytical apparatus for a liquid sample according to claim 8, wherein the containment means is a test tube.

10. The analytical apparatus for a liquid sample according to claim 7, 8 or 9, wherein a white light source such as a tungsten halogen lamp is used as the light source, and a diode array is used as the optical sensor.

11. The analytical apparatus for a liquid sample according to any one of claims 7 to 10, wherein monochromatic near infrared light is used as the light source, and a silicon detector is used as the optical sensor.

12. The analytical apparatus for a liquid sample according to any one of claims 7 to 11, wherein the light conduction means (8) is an optical fiber or a bundle of the optical fibers.

13. The analytical apparatus for a liquid sample according to any of claims 7 to 12, wherein the block (3) is provided with a temperature control means (10) for stabilizing the liquid sample within the containment means or test tube (4) at a predetermined temperature.

FIG. 1

FIG. 2

FIG. 3

FIG. 4

FIG. 5

Nitric acid content of spinach

FIG. 6

Fat content of raw milk